# NEUE EUROPÄISCHE PATENTSCHRIFT

(11) **EP 0 905 161 B2**
(45) Veröffentlichungstag und Bekanntmachung des Hinweises auf die Entscheidung über den Einspruch: **20.04.2011**
(45) Hinweis auf die Patenterteilung: 15.09.2004
(21) Anmeldenummer: 98118033.4
(22) Anmeldetag: 23.09.1998
(51) Int. Cl.: C08G 18/48, C08J 9/14, C08G 18/40, C08G 18/42

(54) **Temperaturstabile Hartschaumstoffe auf Isocyanatbasis mit geringer Sprödigkeit und niedriger Wärmeleitfähigkeit**
Thermostable rigid foams based on isocyanate with low brittleness and low thermal conductivity
Mousses rigides thermostables à base d'isocyanate, peu fragiles et à faible conductivité thermique

(30) Priorität: 24.09.1997 DE 19742012
(43) Veröffentlichungstag der Anmeldung: 31.03.1999
(73) Patentinhaber: BASF SE, 67056 Ludwigshafen (DE)
(72) Erfinder: Rotermund, Udo, Dr., 01990 Ortrand (DE); Hempel, Renate, 01945 Ruhland (DE); Seifert, Holger, Dr., 49448 Hüde (DE); Schmiade, Werner, 49459 Lembruch (DE)

(56) Entgegenhaltungen:
- EP-A- 0 051 744
- EP-A1- 0 095 530
- EP-A2- 0 708 127
- WO-A1-94/01479
- DD-A3- 142 807
- DE-A- 4 328 383
- DE-A- 4 416 838
- DE-A- 19 610 262
- US-A- 5 013 766
- US-A- 5 219 983
- US-A- 5 350 780
- US-A- 5 464 562
- US-A- 5 488 071
- US-A- 5 631 319
- US-A- 5 670 554
- 'Pluronic 25R4 Block Copolymer Surfactant' BASF TECHNICAL BULLETIN 2002, 'Pluronic L64 Block Copolymer Surfactant' BASF TECHNICAL BULLETIN 2002,

## Beschreibung

Die Erfindung betrifft temperaturstabile Hartschaumstoffe auf Isocyanatbasis mit geringer Sprödigkeit und niedriger Wärmeleitfähigkeit, die ohne Verwendung von Treibmitteln hergestellt wurden, die die Ozonschicht schädigen.

Die Herstellung von Hartschaumstoffen auf Isocyanatbasis als Wärmeisolationsmaterial ist seit langem bekannt. Wichtigste chemische Ausgangsstoffe derartiger Verbindungen sind mehrfunktionelle Isocyanate. Als chemische Strukturen, die aus den Polyisocyanaten entstehen, können Polyurethane, Polyharnstoffe, Polyisocyanurate, und auch weitere Isocyanataddukte, wie Allophanate, Biurete, Carbodiimide und deren Isocyanataddukte, Oxazolidone, Polyimide, Polyamide u.a. vorliegen. Dabei wird die Art dieser Strukturen durch die Reaktionspartner der Isocyanate, die Katalyse und die Reaktionsbedingungen gesteuert.

Häufig faßt man diese Isocyanataddukte unter der Bezeichnung Polyurethan-(PUR)-Hartschaumstoffe zusammen, da die Polyurethane unter den Polyisocyanataddukten die häufigste und wichtigste Stoffgruppe sind. Schaumstoffe mit einem bedeutenden Gehalt an Isocyanuratstrukturen werden häufig als Polyurethan/Polyisocyanurat-(PUR-PIR)-Schaumstoffe bezeichnet.

Die Herstellung von derartigen Schaumstoffen wird beispielsweise im Kunststoff-Handbuch, Band VII "Polyurethane", 3. Auflage, herausgegeben von Günter Oertel, Carl-Hanser-Verlag München, Wien, 1993, beschrieben.

In neuerer Zeit werden Hartschaumstoffe für Wärmeisolation von Rohren, die sehr heiße Medien führen, mit sehr hohen Dauertemperturfestigkeiten verlangt. Diese sollen mehr als 10 Jahre bei Temperaturen von 180°C betragen. Das bedeutet, daß die Schaumstoffe im Temperaturlagerungsversuch über 4 Wochen bei 200°C oder über 2 Wochen bei 220°C ohne nachweisliche Zerstörungen bleiben müssen. Derartige Hochleistungswerkstoffe werden außer bei der Isolierung von Heizungsrohren beispielsweise auch in der Raumfahrt verlangt. Dabei müssen die Schaumstoffe bei diesen hohen Temperaturen nach wie vor eine sehr geringe Wärmeleitfähigkeit aufweisen. Die Temperaturbeständigkeit der Schaumstoffe auf Isocyanatbasis ist jedoch meist nur begrenzt. Liegen beispielsweise vorwiegend Urethangruppen im Schaumstoff vor, kann man auch bei sehr stark vernetzend wirkenden Polyolen nur Dauerwärmebeständigkeiten über mehr als 10 Jahre bei 150°C erreichen, was im Lagerversuch über 4 bis 6 Wochen einer Temperatur von 180°C entspricht. Bei 200 oder 220°C ist der Schaum im Lagerversuch bereits nach wenigen Stunden zerstört. Bei einer mechanischen Druckbelastung von 0,04 N/mm² über 24 Stunden gemäß DIN 18164 bei einer Dichte von 70 kg/m³ sind diese Schaumstoffe bis höchstens 170°C stabil. Bei PUR-PIR-Schaumstoffen kann man mit steigendem Polyisocyanuratgehalt die Temperaturstabilität verbessern, wobei allerdings die Sprödigkeit der Schaumstoffe stark zunimmt. Nach einer mehrwöchigen Wärmelagerung bei 200°C oder höheren Temperaturen ist der Schaumstoff so spröde, daß er bereits bei geringen mechanischen Belastungen in kleine Stücke zerspringt.

Ein weiterer Nachteil der bisher bekannten Hartschaumstoffe auf Isocyanatbasis ist die zu hohe Wärmeleitfähigkeit bei höheren Temperaturen.

Die niedrigsten Wärmeleitfähigkeitswerte werden dabei mit Fluorchlorkohlenwasserstoffe (FCKW) als Treibmittel erreicht. Doch auch mit diesen Treibmitteln, die aufgrund ihres hohen Ozonschädigungspotentials (ODP) und Treibhauspotentials (GWP) nicht mehr zugelassen sind, steigt in den Hartschaumstoffen z.B. gemäß GB-A-2,041,953, CH-A-527 855 oder EP-A-24 524 bei erhöhten Temperaturen die Wärmeleitfähigkeit unerwünscht stark an.

Als Alternative zu den die Umwelt stark schädigenden FCKW werden beispielsweise Treibmittel, die nur Kohlenstoff, Wasserstoff und Fluor im Molekül aufweisen, als Treibmittel vorgeschlagen. Ein weiteres alternatives Treibmittel ist Wasser. Jedoch auch diese, beispielsweise in US-A-5,380,768 beschriebenen Schäume sind bei den üblichen Dichten im Bereich von 60 bis 80 kg/m³ nur bis ca. 140°C über 10 Jahre lagerstabil.

Kohlenwasserstoffe, beispielsweise Pentane, sind ebenfalls als alternative physikalische Treibmittel geeignet, führen jedoch zumeist auch zu Hartschaumstoffen mit erhöhten Wärmeleitfähigkeiten. Außerdem ist die Fließfähigkeit derartiger Schaumstoffe, wie sie beispielsweise in DE-A-42 22 519 beschrieben sind, stark eingeschränkt.

Alle bisherigen Schaumstoffrezepturen erfüllen nicht die Forderung nach hoher Wärmebeständigkeit, verbunden mit niedriger Sprödigkeit und niedriger Wärmeleitfähigkeit auch bei hohen Temperaturen.

Die Aufgabe der Erfindung war es, Hartschaumstoffe auf Isocyanatbasis bereitzustellen, die gleichzeitig eine hohe Temperaturstabilität und niedrige Wärmeleitfähigkeit und geringe Sprödigkeit bei hoher Temperatur aufweisen, mit nicht umweltschädigenden Treibmitteln hergestellt werden können und nach der üblichen Technologie zur Herstellung derartiger Hartschaumstoffe hergestellt werden können.

Die Aufgabe konnte gelöst werden durch die gemeinsame Verwendung von
a) Polyetheralkoholen mit einer Funktionalität von 2,5 bis 3,5 und einer Hydroxylzahl von 10 bis 100 mg KOH/g, bevorzugt 25 bis 50 mg KOH/g in einer Menge von 0,2 bis 80 Masse-%, bevorzugt 1 bis 70 Masse-% und besonders bevorzugt 20 bis 60 Masse-%, jeweils bezogen auf die Polyole,
b) Polyesteralkoholen in einer Menge von 5 Masse-% bis 90 Masse-%, bevorzugt 20 Masse-% bis 60 Masse-%, bezogen auf die Polyole,
c) Wasser in einer Menge von 0,2 bis 1,6 Masse-% und besonders bevorzugt 0,3 bis 1 Masse-%, bezogen auf die Polyolkomponente, sowie
d) physikalisch wirkende Treibmittel aus den Elementen Kohlenstoff und Wasserstoff und/oder aus den Elementen Kohlenstoff, Wasserstoff und Fluor in einer Menge von 5 bis 30 Masse-%, bevorzugt 10 bis 25 Masse-%, bezogen auf die Polyolkomponente.

Gegenstand der Erfindung sind demzufolge Hartschaumstoffe auf Isocyanatbasis mit hoher Temperaturstabilität und niedriger Wärmeleitfähigkeit und geringer Sprödigkeit bei hohen Temperaturen, herstellbar durch Umsetzung von
a) Polyisocyanaten mit
b) Verbindungen mit mindestens zwei mit Isocyanatgruppen reaktiven Wasserstoffatomen,
c) Wasser, in Gegenwart von
d) physikalisch wirkenden Treibmitteln, gegebenenfalls in Anwesenheit von
e) Katalysatoren sowie Hilfs- und/oder Zusatzstoffen, dadurch gekennzeichnet, daß
die Komponente b)
bi) mindestens einen Polyetheralkohol mit einer Funktionalität von 2,5 bis 3,5 und einer Hydroxylzahl von 10 bis 100 mg KoH/g, bevorzugt 25 bis 50 mg KOH/g in einer Menge von 0,2 bis 80 Masse-%, bevorzugt 1 bis 70 Masse-% und besonders bevorzugt 20 bis 60 Masse-%, bezogen auf die Komponente b), sowie
bii) mindestens einen Polyesteralkohol in einer Menge von 5 bis 90 Masse-%, bevorzugt 20 bis 60 Masse-%, jeweils bezogen auf b), enthält, die Komponente c) in einer Menge von 0,2 bis 1,6 und besonders bevorzugt 0,3 bis 1 Masse-%, bezogen auf die Summe der Komponenten b) bis e), eingesetzt wird, sowie als Komponente d) Kohlenwasserstoffe und/oder Fluor enthaltende Kohlenwasserstoffe in einer Menge von 5 bis 30 Masse-%, vorzugsweise 10 bis 25 Masse-%, bezogen auf die Summe der Komponenten b) bis e), eingesetzt werden.

Als Polyetheralkohole bi) werden vorzugsweise Polyetheralkohole eingesetzt, die nach an sich bekannten Verfahren durch Addition von Propylenoxid und/oder Ethylenoxid an gemäß Anspruch 1 mehrfunktionelle Startermoleküle hergestellt werden können, wie es beispielsweise im Kunststoffhandbuch a.u.O., Seiten 57 bis 67, beschrieben ist.

Als Startermoleküle sind neben Wasser alle organischen Moleküle mit Zerewitinoff-aktiven Wasserstoffatomen geeignet. Beispielhaft seien genannt Glyzerin, Trimethylolpropan (TMP), Ethylendiamin, Toluylendiamin (TDA), Triethanolamin, Pentaerythrit, Sorbit, Mannit oder Saccharose.

Es ist auch möglich, als Komponente bi) Gemische von Polyolen einzusetzen. Diese erhält man beispielsweise durch den Einsatz von Startergemischen, wie den Zusatz geringer Wassermengen zu den organischen Startermolekülen. Möglich ist auch das Vermischen von Polyolen. Bevorzugt als Komponente bi) eingesetzt werden Addukte von Propylenoxid und Ethylenoxid an Glyzerin oder TMP. Die Alkylenoxide können in den Ketten statistisch verteilt oder blockweise vorliegen, vorzugsweise mit Ethylenoxid-Endblöcken.

Die erfindungsgemäß eingesetzten Polyesteralkohole werden vorzugsweise durch Umsetzung mehrfunktioneller Alkohole mit aromatischen, mindestens zweifunktionellen organischen Säuren und/oder mindestens zweifunktionellen organischen Säuren, die Doppelbindungen enthalten und/oder mindestens zweifunktionellen aliphatischen Carbonsäuren hergestellt. Die Hydroxylzahl der Polyesteralkohole liegt vorzugsweise über 150 mg KOH/g, insbesondere im Bereich von 200 bis 600 mg KOH/g.

Beispiele für erfindungsgemäße Polyesteralkohole sind Umsetzungsprodukte von Phthalsäure und/oder Terephthalsäure und/oder Isophthalsäure und/oder Adipinsäure und/oder Ölsäure und/oder Ricinolsäure mit Glyzerin und/oder Trimethylolpropan und/oder Ethylenglykol und/oder Diethylenglykol und/oder Propylenglykol und/oder Dipropylenglykol und/oder Pentaerythrit.

Bevorzugt sind Polyesteralkohole mit Fettsäureestern, besonders solchen mit einer oder mehreren Doppelbindungen im Molekül, besonders bevorzugt solche mit ungesättigter Fettsäure, aromatischer Dicarbonsäure und aliphatischer Dicarbonsäure in einem Molekül.

Als physikalisch wirkende Treibmittel kommen, wie oben beschrieben, Kohlenwasserstoffe und fluorierte Kohlenwasserstoffe zum Einsatz.

Unter Kohlenwasserstoffen werden hier solche Verbindungen verstanden, die nur die Elemente Kohlenstoff und Wasserstoff im Molekül enthalten. Für die erfindungsgemäßen Hartschaumstoffe kommen insbesondere solche in Betracht, die 3 bis 10 Kohlenstoffatome im Molekül enthalten, insbesondere Pentane, bevorzugt Cyclopentan.

Als fluorierte Kohlenwasserstoffe kommen insbesondere solche mit 2 bis 6 Kohlenstoffatomen im Molekül zum Einsatz, beispielsweise Pentafluorpropan, Pentafluorbutan und Tetrafluorethan.

Die genannten physikalisch wirkenden Treibmittel können sowohl einzeln als auch als Gemische eingesetzt werden.

Neben den Komponenten bi) und bii) können in der Komponente b) noch weitere aktive Wasserstoffatome enthaltende Verbindungen in einer Menge von höchstens 50 Masse-%, bezogen auf die Masse der Komponente b), enthalten sein.

Dabei handelt es sich zum einen um die zur Herstellung von Hartschaumstoffen üblichen und bekannten Polyole, beispielsweise Polyetheralkohole mit einer Funktionalität von mindestens 3, vorzugsweise mindestens 3,5, und einer Hydroxyzahl von größer 100 mg kOH/g, insbesondere von größer 300 mg KOH/g, herstellbar durch Anlagerung von Ethylenoxid und/oder insbesondere Propylenoxid an mindestens 4-funktionelle Startsubstanzen, beispielsweise aromatische Amine, wie Toluylendiamin oder Diphenylmethandiamin, oder mehrfunktionalle hydroxylgruppenhaltige Verbindungen, wie Sorbit, Saccharose, Mannit, Lignin, Kondensate aus Phenol und Formaldehyd.

Zum anderen handelt es sich hierbei um stark verzweigte Polyesteralkohole, vorzugsweise mit Funktionalitäten von 4 bis 10 und Hydroxylzahlen zwischen 150 und 400 mg KOH/g.

Zur Komponente b) gehören auch die Kettenverlängerer und/oder Vernetzer. Als Kettenverlängerer werden zweiiunktionelle, nïedermolekulare Alkohole verwendet, insbesondere solche mit einem Molekulargewicht bis 400, beispielsweise Ethylenglykol, Propylenglykol, Butandiol, Hexandiol. Als Vernetzer werden mindestens dreifunkionelle, niedermolekulare Alkohole eingesetzt, beispielsweise Glyzerin, Trimethylolpropan, Pentaerythrit, Saccharose oder Sorbiz.

Die erfindungsgemäßen Komponenten bi) und bii) können mit den übrigen Bestandtellen der Komponente b) löslich oder unlöslich sein.

Auch die physikalisch wirkenden Treibmittel d) können mit den Komponenten b) bis e) und deren Mischung löslich oder unlöslich sein.

Als Polyisocyanate a) werden die üblichen und bekannten aliphatischen und insbesondere aromatischen Polyisocyanate eingesetzt. Vorzugsweise verwendet werden Diphenylmethandiisocyanat (MDI) und insbesondere Gemische aus MDl und Polyphenylpolymethylenpolyisocyanaten (Roh-MDI).

Als Katalysatoren werden die bekannten Verbindungen eingesetzt, die die Reaktion zwischen Isocyanatgruppen und Hydroylgruppen beschleunigen, beispielsweise tertiäre Aminkatalysatoren, wie Dimethylcyclohexylamin, Imidazole, Morpholine, oder Schwermetallverbindungen wie organische Zinnverbindungen. Sollen isocyanuratgruppen gebildet werden, werden zusätzlich Katalysatoren zugesetzt, die die Isocyananuratbildung katalysieren, beispielsweise Kaliumacetat. Als Hilfs-und/oder Zusatzstoffe dienen beispielsweise Stabilisatoren, Zellregler, Flammschutzmittel oder Füllstoffe.

Ausführliche Angaben zu den einzelnen Aufbaukomponenten finden sich beispielsweise im Kunststoff-Handbuch, a.a.O.

Das molare Verhältnis von NCO-Gruppen zu den mit NCO-Gruppen reaktiven Wasserstoffatomen, die sogenannte Kennzahl, liegt für die.starren Hartschäume zwischen 1,5 und 6, vorzugsweise zwischen 2,8 und 4,5 und für die flexibleren Hartschaume zwischen 1,5 bis 2,8.

Die erfindungsgemäßen Hartschäume besitzen eine hervorragende Temperaturstabilltät. Auch bei-nohen Temperaturen ist die Wärmeleltfähigkeft gering. Aufgrund der guten FlieBfähigkeit können auch komplizierte Formen ausgeschäurnt werden.

Die erfindungsgemäßen Schaumstoffe eignen: sich hervorragend für die Isolation von Femheizungsrohren oder für konstruktiv belastbare Sandwichelemente.

Die Erfindung soll an nachfolgenden Beispielen näher erläutert werden.

### Verwendete Rohstoffe:

### Polyole

Polyole 1a
   Polyesteralkohol, hergestellt aus Adipinsäure / Phthalsäureanhydrid / Ölsäure im Verhältnis 1 : 2 : 1 mit 1,1,1-Trimethvlolpropan mit einem Zahlenmittel der Molmasse von 530 g/Mol, einer Hydroxylzahl 385 mg KOH/g und einer Viskosität bei 75°C von 1370 mPas.
Polyol 1b
   Polyesteralkohol, hergestellt aus Ricinusöl und Glyzerin, mit einer Hydroxylzahl von 500 mg KOH/g.

### Polyole 2

Polyol 2a,
   hergestellt aus Glyzerin als Starter und Propylenoxid als erster Block und Ethylenoxid als Endblock, mit einer Hydroxylzahl von 35 mg KOH/g und einer Viskosität von 850 mPas bei 20°C. Das Masseverhältnis von Propylenoxid zu Ethylenoxid beträgt 6,4.
Polyol 2b,
   hergestellt aus Trimethylolpropan als Starter und Propylenoxid als erster Block und Ethylenoxid als Endblock, mit einer Hydroxylzahl von 26,5 mg KOH/g und einer Viskosität von 1225 mPas bei 20°C. Das Masseverhältnis von Propylenoxid zu Ethylenoxid beträgt 3,7.
2c,
   hergestellt aus Glyzerin als Starter und Propylenoxid als erster Block und Ethylenoxid als Endblock, mit einer Hydroxylzahl von 28 mg KOH/g und einer Viskosität von 1130 mPas bei 20°C. Das Masseverhältnis von Propylenoxid zu Ethylenoxid beträgt 6,1.
2d,
   hergestellt aus Propylenglykol als Starter und Propylenoxid, mit einer Hydroxylzahl von 55 mg KOH/g und einer Viskosität von 325 mPas bei 20°C.
2e,
   hergestellt aus Startergemisch Lignin und Monoethylenglykol und Ethylenoxid als erster Block und Propylenoxid als Endblock, mit einer Hydroxylzahl von 50 mg KOH/g und einer Viskosität von 850 mPas bei 20°C.
2f,
   hergestellt aus Propylenglykol als Starter und Propylenoxid als erster Block und Ethylenoxid als Endblock, mit einer Hydroxylzahl von 29 mg KOH/g und einer Viskosität von 780 mPas bei 20°C. Das Masseverhältnis von Propylenoxid zu Ethylenoxid beträgt 4,4.
Polyol 3,
   hergestellt aus 25,2 Teilen Sorbit und 74,8 Teilen Propylenoxid mit Kaliumhydroxid als Katalysator und 0,5 Teilen Wasser als Costarter. Die Hydroxylzahl beträgt 495 mg KOH/g, die Viskosität bei 20°C 17 900 mPas, die Funktionalität 5.
Isocyanat 1
   Ein Gemisch aus Diphenylmethandiisocyanat und Polyphenylpolymethylenpolyisocyanaten mit einem NCO-Gehalt von 31,7 % und einer Viskosität von 209 mPas bei 25°C.
Isocyanat 2
   Ein Gemisch aus Diphenylmethandiisocyanat und Polyphenylpolymethylenpolyisocyanaten mit einem NCO-Gehalt von 31,5 % und einer Viskosität von 550 mPas bei 25°C.
Isocyanat 3
   Ein Gemisch aus Diphenylmethandiisocyanat und Polyphenylpolymethylenpolyisocyanaten mit einem NCO-Gehalt von 30,5 % und einer Viskosität von 2200 mPas bei 25°C.

### Herstellung und Prüfung der Polyurethan/Polyisocyanurat-Hartschaumstoffe:

### Becherverschäumung:

A- und B-Komponente wurden auf 20°C +/- 0,5 K temperiert. 78 g der A- und B-Komponente wurden in einen Pappbecher mit ca. 660 ml Rauminhalt 10 Sekunden mit einem Laborrührwerk (Drehzahl von 1750 Umdrehungen/min), versehen mit einem Rührorgan der Fa. Vollrath (Durchmesser 65 mm), vermischt. Das Verhältnis von A zu B entsprach dem der jeweiligen Formulierung. Die A-Komponente war eine Vormischung der eingesetzten Polyole, Hilfsstoffe und des Treibmittels, die B-Komponente bestand aus dem Polyisocyanat. Am aufsteigenden Schaum wurden Start-, Steig- und Abbindezeit, vom ausgehärteten Schaum die Rohdichte, in den Tabellen auch als Dichte bezeichnet, in bekannter Weise gemessen. Die Sprödigkeit wurde manuell beurteilt. Die Feinzelligkeit wurde visuell verglichen und mit "feinzellig" (FZ) und "sehr feinzellig" (SFZ) eingeschätzt. Der Vergleich mit mikroskopischen Messungen zeigt, daß der Zelldurchmesser für "FZ" zwischen 300 µm und 400 mµ, für "SFZ" kleiner gleich 250 µ liegt.

### Herstellung von Hartschaumstoff-Formkörpern und deren Prüfung

Die Vermischung erfolgte, wenn nicht anders genannt, mit einer Hochdruck-Schäummaschine PUROMAT® HD 30 der Fa. Elastogran.

Das Mischungsverhältnis wurde entsprechend der Rezeptur eingestellt.

576 g des aus dem Mischkopf austretenden Gemisches aus A-Komponente und Isocyanat wurden in ein auf 45°C temperiertes Formwerkzeug der Abmessungen 300 mm x 400 mm x 80 mm (9,6 -l-Form) gegossen, das anschließend fest verschlossen wurde. Der Schaumstoff entstand mit einer Verdichtung von 1,1 bis 2,0. Die Gesamtdichte des Formkörpers betrug dann 60 +/- 1 kg/m³. In anderen Varianten wurde eine Gesamtdichte von 70 +/- 1 kg/m³ oder 80 +/- 1 kg/m³ durch Einwaage von 672 g bzw. 768 g der aufschäumenden Mischung in das gleiche Formwerkzeug eingestellt, wobei die Verdichtung zwischen 1,5 und 2 lag. Der NCO-Index, das molare Verhältnis von NCO zu wasserstoffaktiven Gruppen und die Abbindezeit wurden für Vergleichs- und erfindungsgemäße Beispiele konstant gehalten.

Nach einer Entformzeit von 30 min wurden nach 25 Stunden Prüfkörper aus dem Inneren des Schaumblockes herausgesägt, um die Wärmeleitfähigkeit und die Wärmeformbeständigkeit zu messen.

In einer weiteren Variante wurde der aus der Maschine austretende Schaum entweder in einem würfelförmigen nach oben offenen 10,5 1-Werkzeug der Kantenlänge von 21,9 cm frei aufgeschäumt oder in Lagen von ca. 2 cm Dicke in kleinen Schüssen übereinander geschichtet.

Bei Maschinenschaum liessen sich mit den erfindungsgemäßen Formulierungen sehr sehr feine Zellen < 150 µm herstellen, deren Größe entweder mit "SSF" oder mit dem unmittelbar mikroskopisch ermittelten Wert charakterisiert wurde.

Die Wärmeleitfähigkeit bei Raumtemperatur wurde mit dem Gerät ANACON Modell 88 der Fa. Anacon, St. Peters Road, Maidenhead Berkshire, England bei 23,9°C Mitteltemperatur (Gradient 37,7°C/10°C) und die Wärmeleitfähigkeit bei erhöhter Temperatur mit dem Gerät Rapid-k VT 400 der Fa. Holometrix Inc., Boston, USA, gemessen. Der Temperaturgradient kann bei dieser Messung in weiten Bereichen variiert werden und wird in den Tabellen mit angegeben.

Die Wärmeleitfähigkeiten wurden 24 Stunden nach der Verschäumung und auch nach einer diffusionsoffenen Lagerung, 120 Stunden bei 80°C, gemessen.

Die Wärmeformbeständigkeit wurde in Anlehnung an DIN 18164 an Körpern der Abmessungen 50 mm x 50 mm x 50 mm nach einer Belastung von 0,04 N/mm² über 24 Stunden als Prozent Verformung gemessen. Die Prüftemperaturen werden in den Tabellen angegeben. In einigen Fällen der PUR/PIR-Formulierungen wurden 2,5-Liter Aluminium/Druckflaschen mit 250 g des aufschäumenden Gemisches (entspricht der Gesamtdichte 100 kg/m³) gefüllt, fest verschlossen und bei 200°C über 4 Wochen, z.T. bei 220°C über 2 Wochen gelagert (Flaschentest). Der Schaumstoff wurde daraufhin visuell begutachtet.

Bei Handverschäumungen wurden entsprechend kleinere Al-Flaschen mit einem Volumen von 0,5 l bei einer Einwaage von 50 g verwendet.

In den folgenden Tabellen sind die Resultate der Verschäumungen gemäß der vorliegenden Erfindung im Vergleich mit nicht erfindungsgemäßen Beispielen ersichtlich:

### Beispiele 1 bis 6 (Becherverschäumungen)

Aus den Beispielen 1 bis 6 erkennt man, daß nur mit der erfindungsgemäßen Kombination der Polyole wenig spröde, duktile, Schäume mit sehr feinen Zellen als Voraussetzung für eine niedrige Wärmeleitfähigkelt erhalten werden.

### PUR/PIR-Hartschaum-Formullerungen

Angabe in Masse-Teilen, Stabilisatoren der Fa. Goldschmidt FZ=felnzeilig, SFZ= sehr feinzellig, S=spröd, SLP = sehr leicht pulverisierbar, d.h. außerordentlich spröd, Z=zäh, d.h. ohne Zerstörung, V=Vergleichsbeispiel

| Beispiel | 1 (V) | 2 (V) | 3 | 4 | 5 | 6 (V) |
|---|---|---|---|---|---|---|
| Polyol 1a | 57,22 | 25,61 | 25,61 | 25,61 | 25,61 | 25,61 |
| Polyol 3 | | | | | | |
| Polyol 2a | 31,61 | | | | | |
| Polyol 2b | | | | 31,61 | | |
| Polyol 2c | | | | | 31,61 | |
| Polyol 2d | | | | | | 31,61 |
| Dipropylengiykol | 16,65 | 16,65 | 16,65 | 16,65 | 16,65 | 16,65 |
| Ethylenglykol | 2,72 | 2,72 | 2,72 | 2,72 | 2,72 | 2,72 |
| Stabilisatorgemisch | 2,56 | 2,56 | 2,56 | 2,56 | 2,56 | 2,56 |
| Wasser | 0,38 | 0,38 | 0,38 | 0,38 | 0,38 | 0,38 |
| Kaliumacetat | 2,41 | 2,41 | 2,41 | 2,41 | 2,41 | 2,41 |
| Tertiäres Amin | 0,26 | 0,26 | 0,26 | 0,26 | 0,26 | 0,26 |
| Cyclopentan | 17,80 | 17,80 | 17,80 | 17,80 | 17,80 | 17,80 |
| Summe | 100,00 | 100,00 | 100,00 | 100,00 | 100,00 | 100,00 |
| isocyanat 1 | 300 | 300 | 300 | 300 | 300 | 300 |
| Startzelt in s | 17 | 15 | 8 | 19 | 17 | 18 |
| Abbindezeit in s | 26 | 25 | 29 | 29 | 29 | 28 |
| Steigzeit in s | 40 | 39 | 43 | 44 | 43 | 42 |
| Rohdichte in kg/m³ | 70 | 66 | 65 | 63 | 68 | 66 |
| Sprödjgkeit | SLP | SLP | Z | Z | Z | Z |
| Schaumstruktur | FZ | FZ | SFZ | SFZ | SFZ | SFZ |

### Beispiele 7 bis 10

### Becherverschäumungen/Handmischungen für Flaschentest

PUR/PIR-Hartschaum-Formulierungen, Angabe in Masse-Tellen, Stabllisatoren der Fa. Goldschmidt, FZ = feinzellig, SFZ=sehr feinzellig, Z = zäh, d.h. ohne Zerstörung verformbar, V = Vergleichsbeispiel.

| Beispiel | 7 (V) | 8 | 9 | 10 |
|---|---|---|---|---|
| Polyol 1a | 31,14 | 31,14 | 31,14 | |
| Polyol 1b | | | | 31,14 |
| Polyol 2a | 38,47 | 38,47 | 38,47 | 38,47 |
| Dipropylenglykol | 20,25 | 20,25 | 20,25 | 20,25 |
| Ethylenglykol | 3,30 | 3,30 | 3,30 | 3,30 |
| Stabilisatorgemisch | 3,12 | 3,12 | 3,12 | 3,12 |
| Wasser | 0,47 | 0,47 | 0,47 | 0,47 |
| Kaliumacetat | 2,93 | 2,93 | 2,93 | 2,93 |
| Tertiäres Amin | 0,32 | 0,32 | 0,32 | 0,32 |
| Summe | 100,00 | 100,00 | 100,00 | 100,00 |
| R 11 | 56,3 | | | |
| iso-Pentan | | 17,0 | | |
| Cyclopentan | | | 17,0 | 17,0 |
| Isocyanat 1 | 390 | 390 | 390 | 390 |
| Startzeit in s | 17 | 13 | 18 | 24 |
| Abbindezeit in s | 28 | 23 | 23 | 40 |
| Steigzeit in s | 39 | 39 | 36 | 57 |
| Rohdichte in kg/m³ | 51 | 52 | | 70 75 |
| Sprödigkeit | Z | Z | Z | Z |
| Schaumstruktur | FZ | FZ | SFZ | SFZ |
| Flaschentest 2 Wochen, 200°C | Schaum völlig schwarz, zerstört | Schaum hell fest, 1 Riß | Schaum hell fest | Schaum hell fest |

### Beispiele 11 bis 14

### Maschinenverschäumungen

PUR/PIR-Hartschaum-Formulierungen, Angabe in Masse-Teilen, Stabilisatoren der Fa. Goldschmidt, PURO-MAT® SV 20/2, Freiverschäumung in 10,5 I Würfel und Formverschäumung

WLF =Wärmeleitfähigkeit in mW/mK, WFB = Wärmeformbeständigkeit nach DIN 18164; 0,04 N/mm² Belastung, 24 h. "Frei" = freigeschäumt, Temperaturgradienten bei WLF-Messungen: WLF 23°C: 10°C/36°C, WLF 95_{°}C (Probe 120 h bei 80°C diffusionsoffen getempert = "get."): 140°C/50°C, V = Vergleichsbeispiel

| Beispiel | 11 (V) | 12 | 13 | 14 | 14a |
|---|---|---|---|---|---|
| Polyol 1a | 25,61 | 25,61 | 25,61 | 25,61 | 25,61 |
| Polyol 2a | 31,62 | 31,62 | 31,62 | 31,62 | 31,62 |
| Dipropylenglykol | 16,65 | 16,65 | 16,65 | 16,65 | 16,65 |
| Ethylenglykol | 2,71 | 2,71 | 2,71 | 2,71 | 2,71 |
| Stabilisatorgemisch | 2,56 | 2,56 | 2,56 | 2,56 | 2,56 |
| Wasser | 0,38 | 0,38 | 0,38 | 0,38 | 0,38 |
| Kaliumacetat | 2,41 | 2,41 | 2,41 | 2,41 | 2,41 |
| Tertiäres Amin | 0,26 | 0,26 | 0,26 | 0,26 | 0,26 |
| R 11 | 34,8 | | | | |
| Cyclopentan | | 17,8 | 17,8 | 17,8 | |
| HFC 245 fa | | | | | 34,8 |
| Summe | 117,00 | 100,00 | 100,00 | 100,00 | 117,00 |
| Isocyanat 1 | 300 | 300 | | | 300 |
| Isocyanat 2 | | | 300 | | |
| Isocyanat 3 | | | | 300 | |
| Startzeit in s | 7 | 6 | 5 | 8 | 7 |
| Abbindezeit in s | 11 | 9 | 9 | 12 | 12 |
| Steigzelt in s | 20 | 18 | 18 | 20 | 19 |
| Dichte "frei" In kg/m³ | 37 | 34,9 | 38,7 | 48 | 38 |
| | Werte 9,6 I-Forrn | | | | |
| Dichte, kg/m³ | 70 | 70 | 70 | 100 | 70 |
| WLF 23°C, 7 Tage | 18,4 | 19,9 | 19,9 | | 19,0 |
| WLF 23°C, get. | 25,6 | 24,4 | 24,9 | 28,4 | 24,0 |
| WLF, 95°C, get. | 37,3 | 35,3 | 34,7 | - | 35,0 |
| Zelldurchmesser, µm | 230 | 133 | 125 | 130 | 135 |
| WFB, 200°C, % | 9,3 | 8,2 | 3,2 | 2,7 | 4,8 |
| Flaschentest 4 Wochen, 200°C | Schaum schwarz, zerstört | Schaum hell | Schaum fest, Risse | Schaum fest, nicht zerstört | Schaum fest, nicht zerstört |
| 2 Wochen, 220°C | total zerstört | braun, fest, Risse | braun, fest, Risse | - | - |

### Beispiele 15 bis 18

### Becherverschäumungen

Handmischungen für Fläschentest, Trelbmittelmischungen in Masse-Teilen, V = Vergleichsbeispiel

| Beisplel | 15 (V) | 16* | 17* | 18* |
|---|---|---|---|---|
| Polyol 1b | 31,14 | 31,14 | 31,14 | 31,14, |
| Polyol 2a | 38,47 | 38,47 | 3B,47 | 38,47 |
| Dipropylenglykol | 20,25 | 20,25 | 20,25 | 20,25 |
| Ethylenglykol | 3,30 | 3,30 | 3,30 | 3,30 |
| Stabilisatorgemisch | 3,12 | 3,12 | 3,12 | 3,12 |
| Wasser | 0,47 | 0,47 | 0.47 | 0,47 |
| Kaliumacetat | 2,93 | 2,93 | 2,93 | 2,93 |
| Tertiäres Amin | 0,32 | 0,32 | 0,32 | 0,32 |
| Summe | 100,00 | 100,00 | 100,00 | 100,00 |
| R 11 | 56,3 | | | |
| iso-Pentan/Aceton 1:1 | | 17,5 | | |
| iso-Pentan/Methylformiat 1:1 | | | 17,5 | 21,1 |
| Isocyanat 1 | 390 | 390 | 390 | 390 |
| Startzeit in s | 17 | 17 | 14 | 15 |
| Abbindezeit in s | 28 | 24 | 21 | 21 |
| Steigzeit in s | 38 | 34 30 | | 32 |
| Rohdichte in kg/m³ | 51 | 62 | 66 | 57 |
| Flaschentest 2 Wochen, 200°C | Schaum schwarz, völlig zerstört | Schaum gelb, fest, 1 Riß | Schaum heligelb | Schaum heligelb |

| | | | | |
|---|---|---|---|---|
| * nicht erfindungsgemäß | | | | |

### Beispiele 19 bis 21

### Becherverschäumungen

PUR/PIR-Hartschaum-Formulierungen, flexible Einstellung, Angabe in Masse-Teilen, Stabilisatoren der Fa. Goldschmidt

FZ = feinzellig, SVZ = sehr feinzellig nach visueller Einschätzung. Bei höherem Wassergehalt bielbt trotz niedrigerer Dichte die WFB bei 200°C unter 10 % Verformung. Fließtest 100 g Schaumgemisch in ein Rohr von 46 mm Durchmesser. Angabe als-Fließlänge in cm. V=Vergleichsbeispiel

| Beispiel | 19 | 20 | 21 (V) |
|---|---|---|---|
| Polyol 1 | 25,61 | 25,61 | 25,71 |
| Polyol 2a | 31,62 | 31,62 | 31,77 |
| Dipropylenglykol | 16,65 | 16,65 | 16,72 |
| Ethylenglykol | 2,71 | 2,71 | 2,73 |
| Stabilisatorgemisch | 2,56 | 2,56 | 2,58 |
| Wasser | 0,38 | 1,6 | 0,0 |
| Kaliumacetat | 2,41 | 2,41 | 2,43 |
| Tertiäres Amin | 0,26 | 0,26 | 0,26 |
| Cyclopentan | 17,8 | 16.58 | 17,8 |
| Summe | 100,00 | 100,00 | 100,00 |
| Dichte in kg/cm³ | 62 | 39 | 85 |
| Isocyanat 2 | 320 | 320 | |
| WFB, 200°C, in % | 6,8 | 9,2 | |
| Härte | hart | etwas flexibler | hart |
| Fließverhalten beim Schäumen in cm | 96 | 120 | 41 |

## Patentansprüche

1. Temperaturstabile Hartschaumstoffe auf Isocyanatbasis, herstellbar durch Umsetzung von
a) Polyisocyanaten mit
b) Verbindungen mit mindestens zwei mit Isocyanatgruppen reaktiven Wasserstoffatomen,
c) Wasser, in Gegenwart von
d) physikalisch wirkenden Treibmitteln, gegebenenfalls in Anwesenheit von
e) Katalysatoren sowie Hilft- und/oder Zusatzstoffen, **dadurch gekennzeichnet, daß** die Komponente b)
bi) mindestens einen Polyetheralkohol mit einer Funktionalität von 2,5 bis 3,5 und einer Hydroxylzanl von 10 bis 100 mg KOH/g in einer Menge von 0,2 bis 80 Masse-%, bezogen auf b), und
bii) mindestens einen Polyesteralkohol in einer Menge von 5 bis 90 Masse-%, bezogen auf b), enthält,
das Wasser c) in einer Menge von 0,2 bis 1, 6 Masse-%, bezogen auf die Summe der Komponenten b) bis e) vorliegt, und als Komponente d) Kohlenwasserstoffe und/oder enthaltende Kohlenwasserstoffe in einer Menge von 5 bis 30 Masse-% bezogen auf die Summe der Komponenten b) bis e), eingesetzt werden.

2. Temperaturstabile Hartschaumstoffe auf Isocyanatbasis nach Anspruch 1, **dadurch gekennzeichnet, daß** der Polyetheralkohol bi) eine Hydroxylzahl von 25 bis 50 mg KOH/g hat.

3. Temperaturstabile Hartschaumstoffe auf Isocyanatbasis nach Anspruch 1, **dadurch gekennzeichnet, daß** der Polyetheralkohol in einer Menge von 1 bis 70 Masse-%, bezogen auf die Komponente b) eingesetzt wird.

4. Temperaturstabile Hartschaumstoffe auf Isocyanatbasis nach Anspruch 1, **dadurch gekennzeichnet, daß** der Polyetheralkohol bi) in einer Menge von 20 bis 60 Masse-%, bezogen auf die Komponente b), eingesetzt wird.

5. Temperaturstabile Hartschaumstoffe auf Isocyanatbasis nach Anspruch 1, **dadurch gekennzeichnet, daß** der Polyetheralkohol bi) durch Anlagerung von Ethylenoxid und/oder Propylenoxid an H-funktionelle Startsubstanzen herstellbar ist.

6. Temperaturstabile Hartschaumstoffe auf Isocyanatbasis nach Anspruch 1, **dadurch gekennzeichnet, daß** die Polyetheralkohole bi) durch Anlagerung von Ethylenoxid und/oder Propylenoxid an Glyzerin und/oder Trimethylolpropan herstellbar ist.

7. Temperaturstabile Hartschaumstoffe auf Isocyanatbasis nach Anspruch 1, **dadurch gekennzeichnet, daß** die Polyesteralkohole bii) durch Umsetzung von Fettsäuren mit mehrfunktionellen Alkoholen herstellbar sind.

8. Temperaturstabile. Hartschaumstoffe auf Isocyanatbasis nach Anspruch 1, **dadurch gekennzeichnet, daß** die Polyesteralkohole bii) durch Umsetzung von ungesättigten Fettsäuren mit mehrfunktionellen Alkoholen herstellbar sind.

9. Temperaturstabile Hartschaumstoffe auf Isocyanatbasis nach Anspruch 1, **dadurch gekennzeichnet, daß** die Polyesteralkohole bii) ungesättigte Fettsäuren, aromatische Dicarbonsäuren und aliphatische Dicarbonsäuren in einem Molekül enthalten.

10. Verfahren zur Herstellung von temperaturstabilen Hartschaumstoffen auf Isocyanatbasis, durch Umsetzung von
a) Polyisocyanaten mit
b) Verbindungen mit mindestens zwei mit Isocyanatgruppen reaktiven Wasserstoffatomen,
c) Wasser, in Gegenwart von
d) physikalisch wirkenden Treibmitteln, gegebenenfalls in Anwesenheit von
e) Katalysatoren sowie Hilfs- und/oder Zusatzstoffen, **dadurch gekennzeichnet, daß** die Komponente b)
bi) mindestens einen Polyetheralkohol mit einer Funktionalität von 2,5 bis 3,5 und einer Hydroxylzahl von 10 bis 100 mg KOH/g in einer Menge von 0,2 bis 80 Masse-%, bezogen auf b), und
bii) mindestens einen Polyesteralkohol in einer Menge von 5 bis 90 Masse-%, bezogen auf b), enthält,
das Wasser c) in einer Menge von 0,2 bis 1,6 Masse-%, bezogen auf die Summe der Komponenten b) bis e) vorliegt, und als Komponente d) Kohlenwasserstoffe und/oder Fluor enthaltende Kohlenwasserstoffe in einer Menge von 5 bis 30 Masse-%, bezogen auf die Summe der Komponenten b) bis e), eingesetzt werden.

## Claims

1. A thermally stable rigid foam based on isocyanate and able to be produced by reacting
a) polyisocyanates with
b) compounds containing at least two hydrogen atoms which can react with isocyanate groups,
c) water, in the presence of
d) physically acting blowing agents, optionally in the presence of
e) catalysts and auxiliaries and/or additives, wherein the component b) comprises
bi) at least one polyether alcohol having a functionality of from 2.5 to 3.5 and a hydroxyl number of from 10 to 100 mg KOH/g in an amount of from 0.2 to 80% by mass, based on b), and
bii) at least one polyester alcohol in an amount of from 5 to 90% by mass, based on b),
the water c) is present in an amount of from 0.2 to 1.6% by mass, based on the sum of the components b) to e), and the component d) used comprises hydrocarbons and/or fluorine-containing hydrocarbons in an amount of from 5 to 30% by mass, based on the sum of the components b) to e).

2. The thermally stable rigid foam based on isocyanate according to claim 1, wherein the polyether alcohol bi) has a hydroxyl number of from 25 to 50 mg KOH/g.

3. The thermally stable rigid foam based on isocyanate, according to claim 1, wherein the polyether alcohol is used in an amount of from 1 to 70% by mass, based on the component b).

4. The thermally stable rigid foam based on isocyanate according to claim 1, wherein the polyether alcohol bi) is used in an amount of from 20 to 60% by mass, based on the component b).

5. The thermally stable rigid foam based on isocyanate according to claim 1, wherein the polyether alcohol bi) can be prepared by addition of ethylene oxide and/or propylene oxide onto H-functional initiator substances.

6. The thermally stable rigid foam based on isocyanate according to claim 1, wherein the polyether alcohol bi) can be prepared by addition of ethylene oxide and/or propylene oxide onto glycerol and/or trimethylolpropane.

7. The thermally stable rigid foam based on isocyanate according to claim 1, wherein the polyester alcohols bii) can be prepared by reacting fatty acids with polyfunctional alcohols.

8. The thermally stable rigid foam based on isocyanate according to claim 1, wherein the polyester alcohols bii) can be prepared by reacting unsaturated fatty acids with polyfunctional alcohols.

9. The thermally stable rigid foam based on isocyanate according to claim 1, wherein the polyester alcohols bii) comprise unsaturated fatty acids, aromatic dicarboxylic acids and aliphatic dicarboxylic acids in one molecule.

10. A process for preparing thermally stable rigid foams based on isocyanate by reacting
a) polyisocyanates with
b) compounds containing at least two hydrogen atoms which can react with isocyanate groups,
c) water, in the presence of
d) physically acting blowing agents, optionally in the presence of
e) catalysts and auxiliaries and/or additives, wherein the component b) comprises
bi) at least one polyether alcohol having a functionality of from 2.5 to 3.5 and a hydroxyl number of from 10 to 100 mg KOH/g in an amount of from 0.2 to 80% by mass, based on b), and
bii) at least one polyester alcohol in an amount of from 5 to 90% by mass, based on b),
the water c) is present in an amount of from 0.2 to 1.6% by mass, based on the sum of the components b) to e), and the component d) used comprises hydrocarbons and/or fluorine-containing hydrocarbons in an amount of from 5 to 30% by mass, based on the sum of the components b) to e).

## Revendications

1. Mousses rigides thermostables à base d'isocyanate, que l'on peut préparer par réaction de
a) polyisocyanates avec
b) des composés comportant au moins deux atomes d'hydrogène réactifs avec des groupes isocyanate,
c) de l'eau, en présence de
d) des agents de moussage ayant une action physique, le cas échéant en présence de
e) catalyseurs ainsi que d'adjuvants et/ou d'additifs, **caractérisées en ce que** le composant b) contient
bi) au moins un polyéther alcool ayant une fonctionnalité de 2,5 à 3,5 et un indice d'hydroxyle de 10 à 100 mg de KOH/g en une quantité de 0,2 à 80 % massique, par rapport à b), et bii) au moins un polyester alcool en une quantité de 5 à 90 % massique, par rapport à b), l'eau c) se présente en une quantité de 0,2 à 1,6 % massique, par rapport à la somme des composants b) à e), et comme composant d) des hydrocarbures et/ou des hydrocarbures contenant du fluor sont employés en une quantité allant de 5 à 30 % massique, par rapport à la somme des composants b) à e).

2. Mousses rigides thermostables à base d'isocyanate selon la revendication 1, **caractérisées en ce que** le polyéther alcool bi) possède un indice d'hydroxyle allant de 25 à 50 mg de KOH/g.

3. Mousses rigides thermostables à base d'isocyanate selon la revendication 1, **caractérisées en ce que** le polyéther alcool est employé en une quantité de 1 à 70 % massique, par rapport au composant b).

4. Mousses rigides thermostables à base d'isocyanate selon la revendication 1, **caractérisées en ce que** le polyéther alcool bi) est employé en une quantité de 20 à 60 % massique, par rapport au composant b).

5. Mousses rigides thermostables à base d'isocyanate selon la revendication 1, **caractérisées en ce que** le polyéther alcool bi) peut être préparé par fixation d'oxyde d'éthylène et/ou bioxyde de propylène à des substances de départ à fonction H.

6. Mousses rigides thermostables à base d'isocyanate, selon la revendication 1, **caractérisées en ce que** les polyéther alcools bi) peuvent être préparés par fixation d'oxyde d'éthylène et/ou d'oxyde de propylène à la glycérine et/ou au triméthylolpropane.

7. Mousses rigides thermostables à base d'isocyanate selon la revendication 1, **caractérisées en ce que** les polyester alcools bii) peuvent être préparés par réaction d'acides gras avec des alcools polyfonctionnels.

8. Mousses rigides thermostables à base d'isocyanate selon la revendication 1, **caractérisées en ce que** les polyester alcools bii) peuvent être préparés par réaction d'acides gras insaturés avec des alcools polyfonctionnels.

9. Mousses rigides thermostables à base d'isocyanate selon la revendication 1, **caractérisées en ce que** les polyester alcools bii) contiennent des acides gras insaturés, des acides dicarboxyliques aromatiques et des acides dicarboxyliques aliphatiques dans une molécule.

10. Procédé de préparation de mousses rigides thermostables à base d'isocyanate, par réaction de
a) polyisocyanates avec
b) des composés comportant au moins deux atomes d'hydrogène réactifs avec des groupes isocyanate,
c) de l'eau, en présence de
d) des agents de moussage à action physique, le cas échéant en présence de
e) catalyseurs ainsi que d'adjuvants et/ou d'additifs, **caractérisé en ce que** le composant b) contient
bi) au moins un polyéther alcool ayant une fonctionnalité de 2,5 à 3,5 et un indice d'hydroxyle de 10 à 100 mg de KOH/g en une quantité de 0,2 à 80 % massique, par rapport à b), et
bii) au moins un polyester alcool en une quantité de 5 à 90 % massique, par rapport à b),
l'eau c) se présente en une quantité de 0,2 à 1.6 % massique, par rapport à la somme des composants b) à e), et comme composant d) on utilise des hydrocarbures et/ou des hydrocarbures contenant du fluor en une quantité de 5 à 30 % massique, par rapport à la somme des composants b) à e).
